# EUROPEAN PATENT APPLICATION

(11) **EP 4 575 412 A1**
(43) Date of publication of application: **25.06.2025**
(21) Application number: 23217987.9
(22) Date of filing: 19.12.2023
(51) Int. Cl.: G01D 5/02, G01D 5/04, G01D 13/00

(54) **MECHANICAL POSITION INDICATOR AND ACTUATOR OF AUTOMATION TECHNOLOGY**

(71) Applicant: AUMA Riester GmbH & Co. KG, 79379 Müllheim (DE)
(72) Inventor: Tritschler, Matthias, 79258 Hartheim (DE); Ingenhoven, Benjamin, 79379 Müllheim (DE)
(74) Representative: Mertzlufft-Paufler, Cornelius

(57) **Abstract**

The invention is concerned with a mechanical position indicator (100) comprising:
an indicating element for representing (110);
an indicator gear set (120) for driving said indicating element, wherein said indicator gear set comprises an input (121) and an output (122);
a motion transmitter (130) for transmitting a motion of said indicator gear set to said indicating element being mechanically connected to the indicating element and releasably connected to the indicator gear set;
a fixation mechanism (160) especially for fixing the indicator gear set with said output of said actuator,
characterized in that
said fixation mechanism comprises
a hollow connection shaft (161) with a shaft wall (161.2) and a shaft axis (161.1), with at least one radial pass (161.21) through said shaft wall;
at least one radially acting friction device (162) situated in a corresponding pass;
at least one axially acting force delivery device (163) situated inside the hollow connection shaft.

## Description

The invention is concerned with a mechanical position indicator of an actuator of automation technology and such an actuator.

Actuators of automation technology are used to operate mechanical devices such as valves in process industry tubing for example. By opening or closing valves in such tubing the flow of a process medium is permitted or inhibited. In this way for example a chemical reaction or a filling process can be controlled.

For operators of such a process industry plant often it is important to be able to check an actuation state of a mechanical device. Actuators according to the state of the art as shown for example in US9618136B2 often come with a mechanical position indicator being integrated with the actuator.

In case of a damaged mechanical position indicator for example it is advantageous if the mechanical position indicator is exchangeable.

Object of the invention is to provide a mechanical position indicator, which is fixable to an actuator of automation technology in a robust and simple manner and such an actuator of automation technology.

This problem is solved with a mechanical position indicator according to claim 1 and an actuator according to claim 8.

An inventive mechanical position indicator for representing an actuation state of an actuator of automation technology connectable to an actuator gear set or an output of said actuator, comprises:
an indicating element for representing said actuation state;
an indicator gear set for driving said indicating element, wherein said indicator gear set comprises an input and an output;
a motion transmitter for transmitting a motion of said indicator gear set to said indicating element being mechanically connected to the indicating element and releasably connected to the indicator gear set;
a fixation mechanism especially for fixing the indicator gear set with said output of said actuator or an output of said actuator gear set,
characterized in that
said fixation mechanism comprises
a hollow connection shaft with a shaft wall and a shaft axis, the hollow connection shaft comprising at least one radial pass through said shaft wall;
at least one radially acting friction device situated in a corresponding pass;
at least one axially acting force delivery device situated inside the hollow connection shaft arranged for setting a force on said friction device.

In this way the mechanical position indicator may be connected robustly to an actuator for example with a hollow output shaft or a hollow actuator gear shaft. The fixation mechanism is placed within the hollow output shaft and a pressure or force to the friction device is applied such that a rotational fixation between the indicator gear set and said hollow output shaft is achieved.

In an embodiment said force delivery device comprises a force delivery element,
wherein each of said at least one friction device comprises a force accepting element,
wherein an angle between a tangent plane through a contact point between said force delivery element and said force accepting element and said shaft axis is
less than 80 degrees, and exemplary less than 70 degrees and especially less than 60 degrees
   and / or
more than 10 degrees, and exemplary more than 20 degrees and especially more than 30 degrees.

In that way, applying a force onto said force accepting element is translated well into a movement of said force accepting element and therefore a buildup of friction between said fixation mechanism and said output respectively output of said actuator gear set.

In an embodiment a shape of said force delivery element at least partially follows a cone, or an ellipsoid, or a sphere or a polyhedron such as a tetrahedron or a pentahedron, especially a regular polyhedron, or a wedge.

In an embodiment a shape of said force accepting element at least partially follows a cone, or an ellipsoid, or a sphere or a polyhedron such as a tetrahedron or a pentahedron, especially a regular tetrahedron, or a wedge.

In an embodiment said at least one force delivery element and said at least one force accepting element are each ellipsoidal, and especially spherical.

In an embodiment each of said at least one friction device comprises a friction element, wherein a friction part of said friction element protrudes from a corresponding one of said pass.

In that way, friction between said friction device and said hollow output shaft may be achieved.

An inventive arrangement of automation technology comprises:
a gear set comprising a hollow output shaft;
a mechanical position indicator according to one of former claims for representing an actuation state of said gear set being mechanically connected to said gear set,
wherein said hollow connection shaft is positioned inside said output shaft or gear shaft, wherein said at least one friction device fixes the position of the connecting shaft relatively to said output shaft or gear shaft.

An inventive actuator of automation technology comprises:
an output with an output shaft for actuating a mechanical device such as a valve;
a gear set;
a drive, wherein the drive is set up for driving said output, and wherein the gear set is set up for transmitting a force or a torque from the drive towards the output shaft;
characterized in that
the actuator comprises an inventive mechanical position indicator for representing an actuation state of said output shaft or said gear set being mechanically connected with said output shaft or gear set,
wherein said output shaft is hollow or wherein said gear set comprises a hollow gear shaft,
wherein said connecting shaft is positioned inside said output shaft or gear shaft, wherein said at least one friction element fixes the position of the connecting shaft relatively to said output shaft or gear shaft.

In an embodiment wherein said actuator comprises an actuator housing arrangement, wherein said output shaft, said drive and said gear set are arranged inside said actuator housing arrangement,
wherein said mechanical position indicator housing is fixed to the actuating housing arrangement.

In an embodiment said drive is an electric, hydraulic, or pneumatic drive, wherein the actuator comprises an electronic circuit for actuating said drive.

In the following the invention is explained with the help of figures.
Fig. 1 shows an angled view of an exemplary inventive actuator;
Fig. 2 shows a front view of the actuator as shown in Fig. 1;
Fig. 3 shows a longitudinal section of the exemplary inventive mechanical position indicator as shown in Fig. 1;
Fig. 4 a) shows a longitudinal section of an exemplary inventive indicator gear set and Fig. 4 b) an angular view on a part of said indicator gear set;
Fig. 5 a) shows a longitudinal section of an exemplary inventive ball coupling and Fig. 5 b) shows an angular view on a part of said indicator gear set, and Fig. 5 c) shows embodiments of parts of said ball coupling;
Fig. 6 shows an exemplary assembly scheme of an exemplary inventive actuator.

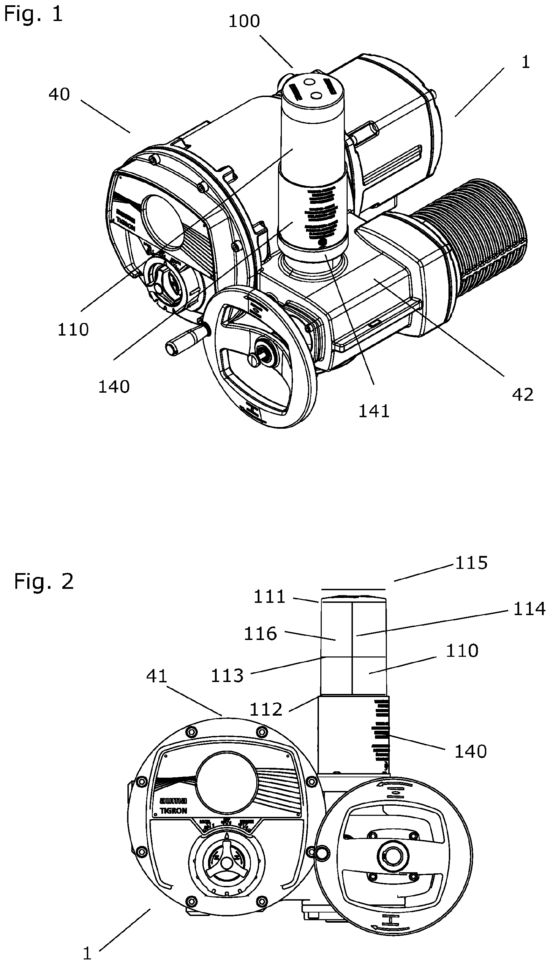

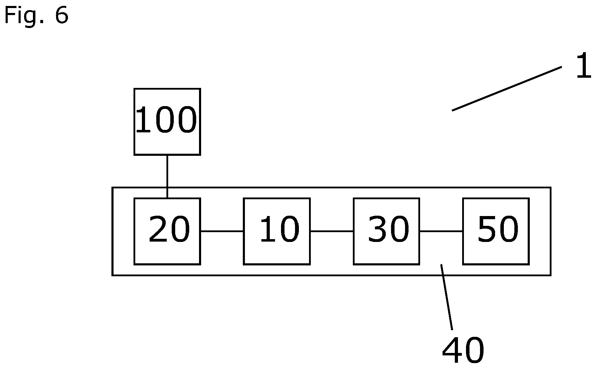

Fig. 1 shows an angled view of an exemplary inventive actuator 1, and Fig. 2 shows a front view of said actuator, said actuator 1 comprising a housing arrangement 40, in which a drive 30, an electronic circuit 50, an actuator gear set 10 and an output 20 are allocated, see also Fig. 6. The drive 30 is arranged for delivering a force or a torque onto a mechanical device such as a valve, and may be an electric, pneumatic, or hydraulic drive. Said electronic circuit is arranged for controlling said drive. Said actuator gear set transmits the drive force respectively drive torque onto said output, to which output said mechanic device is couplable.

To give an operator information about an actuation state of said mechanical device, said actuator comprises a mechanical position indicator 100, which translates the actuation of said mechanical device into a linear position 113 of an indicating element 110. The linear position 113 of said indicating element 110 is between a first limit 111 and a second limit 112 along a longitudinal axis 117 of said mechanical position indicator, wherein for example in a mounted state with respect to a mounting orientation the first limit is a limit averted from said actuator, and the second limit is a limit facing said actuator. Dependent on the actuator and on the application respectively mechanical device to control, one of said first limit and said second limit varies. The mounting orientation may be vertical as shown here or horizontal or a diagonal for example.

The actuator housing arrangement along said mounting orientation has a maximal extension 41.

In an embodiment as shown said first limit and said second limit of said linear position of said indicating element protrude said maximal extension, wherein a spatial separation of said first limit and said second limit is at least 1/2 of a cube root of said actuator housing volume 42,
and/or
wherein said spatial separation is at least 15 centimeters, and preferably at least 20 centimeters and especially at least 25 centimeters,
   and/or
wherein said spatial separation is at most 300 centimeters, and preferably at most 250 centimeters and especially at most 200 centimeters,
   and/or
wherein said spatial separation is at least a half of a largest diameter of a convex envelope of said housing arrangement.

In this way the mechanical position indicator is well visible from a notable distance, such that an actuation position respectively actuation state can be shown also to more distant observers. Therefor for example maintaining control over an industrial plant is aided.

In an embodiment a diameter 115 of said indicating element 110 in a cross section is at least 2 centimeters and preferably at least 5 centimeters and especially at least 6 centimeters
and/or
wherein said diameter is at most 70 centimeters, and preferably at most 50 centimeters and especially at most 30 centimeters.

A least diameter of said mechanical position indicator further aids maintaining control over said industrial plant. A maximum diameter of said mechanical position indicator ensures a manageability of said mechanical position indicator.

In an embodiment a ratio of a separation of said first limit 111 and said second limit 112 and said diameter 115 of said indicating element 110 is
at least 2 and preferably at least 3 and especially at least 5
   and/or
at most 20 and preferably at most 15 and especially at most 10.

In an embodiment said indicating element 110 is housed within an optically transparent housing part 151 of a housing 150 of said mechanical position indicator as shown in Figs. 1 to 3.

In an embodiment said indicating element 110 has a first color, and wherein a background element 116 being partially covered by said indicating element dependent on said actuation state has a second color, wherein said first color and said second color on a gradient color wheel respectively gradient color circle have an angular distance of at least 50 degrees and especially at least 60 degrees. Said color circle may be a color circle based on RGB or CMY or HSV or HSL color standard. In this way it is ensured, that the colors of the indication element and the background element are well different with respect to human perception. For example, the color combination green and red is useful, however red and orange is not.

In an embodiment said indicating element 110 in a horizontal cross section offers the possibility to check said actuation state within an angular range of at least 180 and preferably at least 270 degrees and especially 360 degrees as shown in Figs. 1, 2 and 3.

As shown exemplified this can be achieved with said indicating element following a cylindrical form, wherein said background element is encompassed by said indicating element. The indicating element covers said background element dependent on the actuation state of a mechanical device.

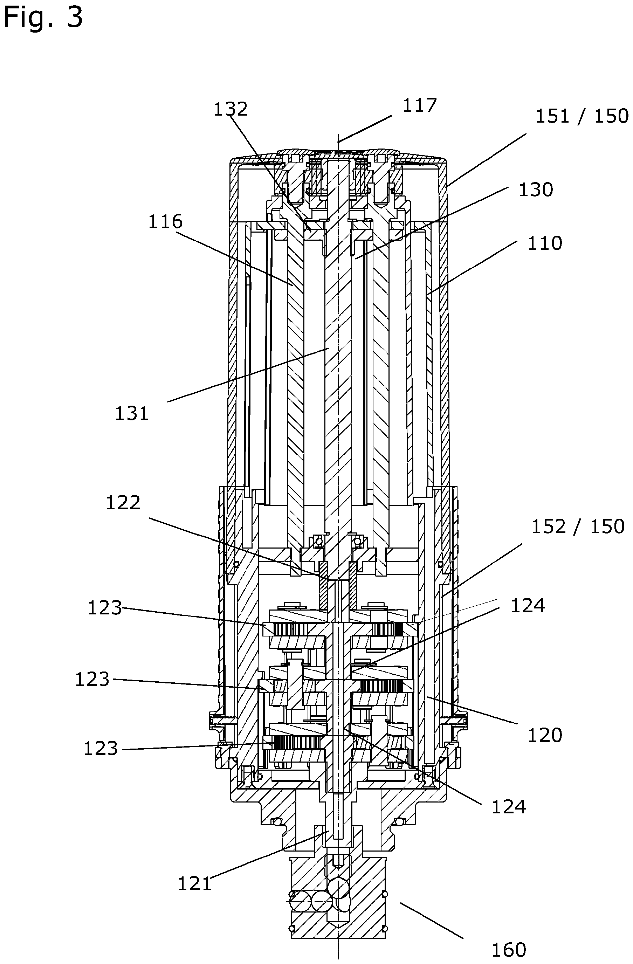

In an embodiment as shown, the mechanical position indicator comprises a mask 140 for demonstrating a position of said second limit 112. The mask 140 is slidable along an axis of said mechanical position indicator and in an embodiment as shown fixable with a mask fixation mechanism 141 such as a screw mechanism or a latch mechanism or such alike. Alternatively, the mask may keep its position due to friction. Said second limit is dependent on the mechanical device the actuator is going to be attached to, and dependent on a chosen actuator gear set 10 as shown in Fig. 6 and dependent on a chosen indicator gear set 120 as shown in Fig. 3. With said slidable mask, the mechanical position indicator can be adapted to a certain application so that the varying limit of said linear position 113 is visually well defined.

Fig. 3 shows a longitudinal section of the mechanical position indicator 100 as shown in Fig. 1 and 2 comprising an indicator gear set 120, said mask 140, and a fixation mechanism 160 for fixing said mechanical position indicator with said actuator 1. The indicator gear set comprises an input 121 for receiving a force or a torque and an output for driving the indicating element 110. A motion transmitter 130 is arranged for receiving a motion from said output and transmitting said motion of said indicator gear set to said indicating element being mechanically connected to the indicating element and connected to the indicator gear set via the output 122. The motion transmitter comprises a spindle 131 and a spindle nut 132,
wherein said indicating element 110 and said spindle nut are connected to each other fixedly, wherein said indicator gear set 120 is arranged for rotating said spindle and wherein said indicating element is mounted rotationally fixed. In an embodiment as shown said mechanical position indicator 110 comprises an optically transparent housing part 151 of a housing 150 for protecting said motion transmitter and said planetary gear set from harm and dirt. As shown the planetary gear set is arranged within a gear set housing part 152.

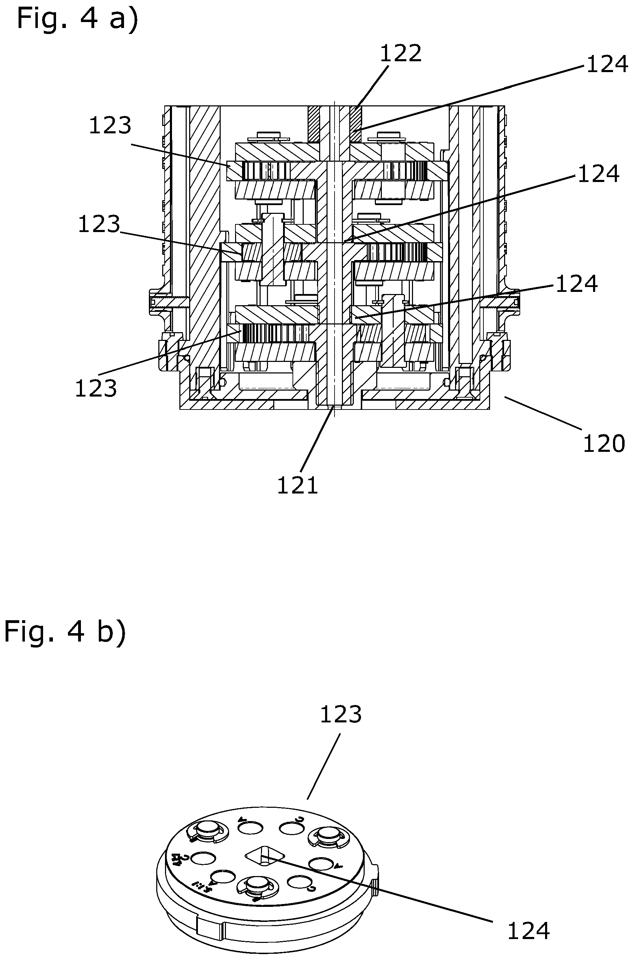

Fig. 4 a) shows a longitudinal section of an exemplary embodiment of said indicator gear set 120, and Fig. 4 b) shows an angular view on a modular planetary gear stage 123. In the embodiment as shown, said indicator gear set comprises a set of three planetary gear stages each being connected with a coupling 124. The number of planetary gear stages may vary between 1 and 5. Especially the number of said planetary gear stages is at least 2. With the help of said at least one planetary gear stage a transmission ratio between said actuator gear set respectively actuator output and said motion transmitter respectively said indicating element 110 may be adjusted by exchanging one or more planetary gear stages of by exchanging the entire indicator gear set being connected with the motion transmitter 130 with a coupling 124. In this way, the mechanical position indicator may be adapted to a wide range of applications as well as actuators in such a way, that one of said first limit 111 and said second limit 112, here the second limit 112 may be kept in a certain axial interval of said longitudinal axis 117. A modular embodiment of said planetary gear stages as shown in Fig. 4 b) increases an adaptability of said mechanical position indicator.

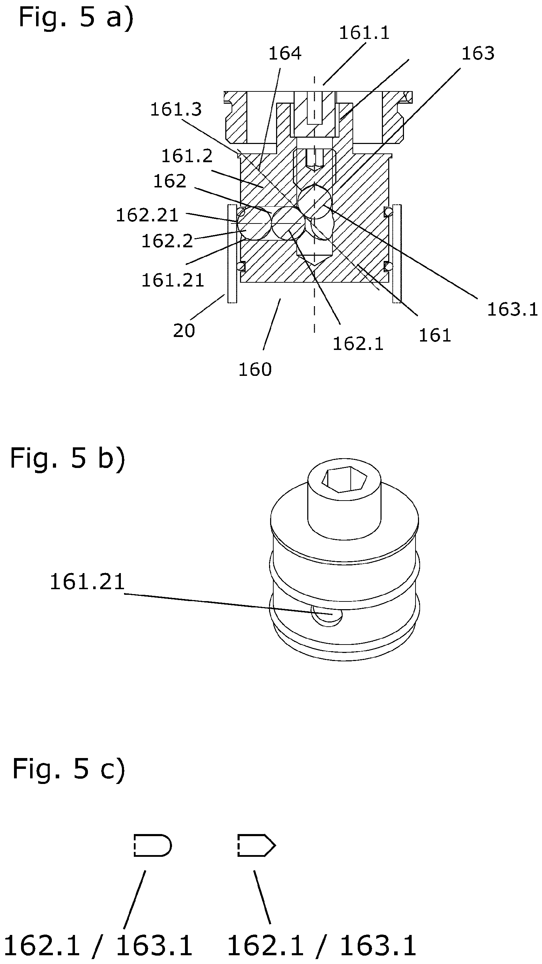

Figs. 5 a) to 5 c) illustrate exemplary inventive embodiments of said fixation mechanism 160. Said fixation mechanism is arranged for fixing said mechanical position indicator 110 with said hollow output shaft 20 of said actuator or a hollow output shaft of said actuator gear set 10. Said fixation mechanism 160 comprises a hollow connection shaft 161 with a shaft wall 161.2 and a shaft axis 161.1, the hollow connection shaft comprising at least one pass 161.21 through said shaft wall;
at least one radially acting friction device 162 situated in a corresponding pass; one axially acting force delivery device 163 situated inside the hollow connection shaft arranged for setting a force on said friction device, which friction device in turn when in a mounted state a force is applied by that force delivery device. The pass advantageously, but not necessarily is oriented radially with respect to an output shaft axis or said shaft axis 161.1. At least a radial component of said orientation is larger than a tangential component.

In that way a friction grip between the actuator output respectively actuator gear set output and said mechanical position indicator input 121 is achieved. With additionally rotationally fixing said housing 150 of said mechanical position indicator for example at said housing arrangement, a movement of said drive 30 can be transferred to said indicating element 110. The rotational fixation can be achieved for example with a bracket mechanism or with a screwing mechanism.

As shown exemplary in this embodiment, said force delivery device 163 comprises a force delivery element 163.1, wherein each of said at least one friction device 162 comprises a force accepting element 162.1, wherein an angle between a tangent plane 164 through a contact point between said force delivery element and said force accepting element and said shaft axis is 45 degrees. Said angle may be less than 80 degrees, and exemplary less than 70 degrees and especially less than 60 degrees
and / or
more than 10 degrees, and exemplary more than 20 degrees and especially more than 30 degrees. In that way, applying a force onto said force accepting element 162.1 is translated well into a movement of said force accepting element and therefore a buildup of friction between said fixation mechanism 160 and said output 20 respectively output of said actuator gear set 10.

A friction element is arranged for creating friction between said fixation mechanism 160 and said hollow actuator output 20 respectively hollow actuator gear shaft via a friction part 162.21 of said friction element, said friction part protruding from a corresponding one of said pass.

As shown exemplary in the embodiment of Fig. 5a), said force delivery element 163.1, said force accepting element 162.1 and said friction element 162.2 are spherical. In this way a very simple and effective force guiding mechanism can be arranged. Alternatively, the force accepting element 162.1 and the friction element 162.2 may be one single element. Alternatively, instead of being spherical, said elements may be also ellipsoidal. Alternatively, said elements at least partially follow a cone (see Fig. 5 c)), or an ellipsoid, or a sphere (see Fig. 5 c)) or a polyhedron such as a tetrahedron or a pentahedron, especially a regular polyhedron, or a wedge. The mechanism works if between said force delivery element and said force accepting element a contact point or contact line or contact area with said tangential plane inclined to said shaft axis 161.1 is arranged.

Fig. 6 depicts a schematic of a functional relationship of different parts of an exemplary inventive actuator 1. The actuator comprises a drive 30, an electronic circuit 50 to control said drive, an actuator gear set 10 and an output 20 to actuate a mechanical device such as a valve. The drive is arranged to charge said output with a force or a torque. Said actuator gear set is arranged to transmit said force respectively said torque from said drive to said output. The inventive mechanical position indicator may be connected to said output 20 as shown here or to the actuator gear set 10.

Features of embodiments are exchangeable and/or combinable if there are no technical or logical contradictions or otherwise stated.

The mechanical position indicator as shown may also be applied to purely mechanical actuators actuated for example with a hand wheel.

### Reference number list

- 1: Actuator
- 10: Actuator gear set
- 20: Output
- 30: Drive
- 40: Actuator housing arrangement
- 41: Maximal extension
- 42: Actuator housing volume
- 50: Electronic circuit
- 100: Mechanical position indicator
- 110: Indicating element
- 111: First limit
- 112: Second limit
- 113: Linear Position
- 114: Spatial separation
- 115: Diameter
- 116: Background element
- 120: Indicator gear set
- 121: Input
- 122: Output
- 123: Planetary gear stage
- 124: Coupling
- 130: Motion transmitter
- 131: Spindle
- 132: Spindle nut
- 140: Mask
- 141: Mask fixation mechanism
- 150: Housing
- 151: Transparent housing part
- 152: Gear set housing part
- 160: Fixation mechanism
- 161: Hollow connection shaft
- 161.1: Shaft axis
- 161.2: Shaft wall
- 161.21: Shaft pass
- 161.3: Shaft stop
- 162: Friction device
- 162.1: Force accepting element
- 162.2: Friction element
- 162.21: Friction part
- 163: Force delivery device
- 163.1: Force delivery element
- 164: Tangent plane

## Claims

1. Mechanical position indicator (100) for representing an actuation state of an actuator (1) of automation technology, comprising:
an indicating element for representing (110) said actuation state;
an indicator gear set (120) for driving said indicating element, wherein said indicator gear set comprises an input (121) and an output (122);
a motion transmitter (130) for transmitting a motion of said indicator gear set to said indicating element being mechanically connected to the indicating element and releasably connected to the indicator gear set;
a fixation mechanism (160) especially for fixing the indicator gear set with said output of said actuator,
**characterized in that**
said fixation mechanism comprises
a hollow connection shaft (161) with a shaft wall (161.2) and a shaft axis (161.1), the hollow connection shaft comprising at least one pass (161.21), especially at least one radial pass, through said shaft wall;
at least one radially acting friction device (162) situated in a corresponding pass;
one axially acting force delivery device (163) situated inside the hollow connection shaft arranged for setting a force on said friction device.

2. Mechanical position indicator according to claim 1, wherein said force delivery device (163) comprises a force delivery element (163.1),
wherein each of said at least one friction device (162) comprises a force accepting element (162.1),
wherein an angle between a tangent plane (164) through a contact point between said force delivery element and said force accepting element and said shaft axis is less than 80 degrees, and exemplary less than 70 degrees and especially less than 60 degrees
and / or
more than 10 degrees, and exemplary more than 20 degrees and especially more than 30 degrees.

3. Mechanical position indicator according to claim 2, wherein a shape of said force delivery element (163.1) at least partially follows a cone, or an ellipsoid, or a sphere or a polyhedron such as a tetrahedron or a pentahedron, especially a regular polyhedron, or a wedge.

4. Mechanical position indicator according to claim 2 or 3,
wherein a shape of said force accepting element (162.1) at least partially follows a cone, or an ellipsoid, or a sphere or a polyhedron such as a tetrahedron or a pentahedron, especially a regular tetrahedron, or a wedge.

5. Mechanical position indicator according to one of claims 3 or 4,
wherein said force delivery element (163.1) and said at least one force accepting element (162.1) are each ellipsoidal, and especially spherical.

6. Mechanical position indicator according to one of former claims,
wherein each of said at least one friction device (162) comprises a friction element (162.2),
wherein a friction part (162.21) of said friction element protrudes from a corresponding one of said pass.

7. Arrangement of automation technology comprising:
a gear set comprising a hollow output shaft;
a mechanical position indicator (100) according to one of former claims for representing an actuation state of said gear set being mechanically connected with said gear set,
wherein said hollow connection shaft (161) is positioned inside said output shaft or gear shaft, wherein said at least one friction device (162) fixes the position of the connecting shaft relatively to said output shaft or gear shaft.

8. Actuator (1) of automation technology comprising:
an output (20) with an output shaft for actuating a mechanical device such as a valve;
an actuator gear set (10);
a drive (30), wherein the drive is set up for driving said output, and wherein the gear set is set up for transmitting a force or a torque from the drive towards the output shaft;
**characterized in that**
the actuator comprises a mechanical position indicator (100) according to one of claims 1 to 7 for representing an actuation state of said output shaft or said gear set being mechanically connected with said output shaft or gear set,
wherein said output shaft is hollow or wherein said gear set comprises a hollow gear shaft,
wherein said hollow connection shaft (161) is positioned inside said output shaft or gear shaft, wherein said at least one friction device (162) fixes the position of the connecting shaft relatively to said output shaft or gear shaft.

9. Actuator of automation technology according to claim 8,
wherein said actuator comprises an actuator housing arrangement (40), wherein said output shaft, said drive (30) and said actuator gear set (10) are arranged inside said actuator housing arrangement,
wherein said mechanical position indicator is fixed to the actuating housing arrangement.

10. Actuator according to claim 8 or 9,
wherein said drive is an electric, hydraulic, or pneumatic drive,
wherein the actuator comprises an electronic circuit (50) for actuating said drive.
